# EUROPÄISCHE PATENTANMELDUNG

(11) **EP 3 153 967 A1**
(43) Veröffentlichungstag der Anmeldung: **12.04.2017**
(21) Anmeldenummer: 16191861.0
(22) Anmeldetag: 30.09.2016
(51) Int. Cl.: G06F 9/44

(54) **PLUG AND PLAY AUTOKONFIGURATION VON SOFTWARE FÜR EIN MILITITÄRISCHES EINSATZCOMPUTERSYSTEM**

(30) Priorität: 07.10.2015 DE 102015012971
(71) Anmelder: MBDA Deutschland GmbH, 86529 Schrobenhausen (DE)
(72) Erfinder: Grabmeier, Michael, 83022 Rosenheim (DE); Ruisinger, Konrad, 86672 Thierhaupten (DE); Nebel, Florian, 82140 Olching (DE)
(74) Vertreter: Isarpatent

(57) **Zusammenfassung**

Ein portables Einsatzcomputersystem, insbesondere für militärische Einsätze, mit einem Bediencomputer (1), der eine Rechnereinheit (10), einer Anzeige- und Bedieneinheit (12) und zumindest eine Datenschnittstelle (14, 15) aufweist, und mit einer Mehrzahl von externen Komponenten (2, 3, 40, 50, 60, 70, 80, 82), die an die zumindest eine Datenschnittstelle (14, 15) des Bediencomputers (1) anschließbar sind, wobei die Rechnereinheit (10) ausgestaltet ist, um nach dem Einschalten des Bediencomputers (1) oder nach dem Anschließen einer externen Komponente (2, 3, 40, 50, 60, 70, 80, 82) zu überprüfen, ob die zumindest eine Datenschnittstelle (14, 15) mit zumindest einer der externen Komponenten (2, 3, 40, 50, 60, 70, 80, 82) verbunden ist und, falls zutreffend, mit welcher externen Komponente (2, 3, 40, 50, 60, 70, 80, 82) die jeweilige Datenschnittstelle (14, 15) mittelbar oder unmittelbar verbunden ist, und
um in Abhängigkeit vom Ergebnis dieser Überprüfung selbsttätig einen Betriebsmodus für den Bediencomputer (1) aus einer Mehrzahl von in einer Speichereinrichtung (16) gespeicherten Betriebsmodi auszuwählen und den Bediencomputer (1) und/oder eine auf dem Bediencomputer (1) laufende Software entsprechend zu konfigurieren.

## Beschreibung

### TECHNISCHES GEBIET

Die vorliegende Erfindung betrifft ein portables oder mobiles Einsatzcomputersystem, das insbesondere, aber nicht nur für militärische Einsätze geeignet ist.

### HINTERGRUND DER ERFINDUNG

Zur Durchführung von Einsätzen, insbesondere von militärischen Einsätzen, ist es vor der Planung des Einsatzes erforderlich, ein Lagebild des Einsatzgebietes zu erstellen. Mit den dabei erfassten Informationen erfolgt die Einsatzplanung, in der der konkrete Einsatzort sowie die Transportwege für Menschen und Material zum Einsatzort ebenso festgelegt werden wie der Selbstschutz der am Einsatzort befindlichen Truppen und die konkrete Einsatzaufgabe. Die Einsatzplanung umfasst darüber hinaus auch die Anforderungen an und die Einsatzaufgaben für den Nachschub, das Nachrichtenwesen und das Sanitätswesen. Nach erfolgter Einsatzplanung wird dann der Einsatz anhand des Einsatzplans durchgeführt.

Angefangen von der Erkundung des Einsatzgebietes bis zur Ausführung der Einsatzaufgabe werden Informationen gesammelt und weitergeben, wobei unterschiedliche Informationsmedien genutzt werden und es zu einer Vielzahl von so genannten Medienbrüchen kommt. Insbesondere dann, wenn es aufgrund von Veränderungen von Randbedingungen erforderlich ist, den Einsatzplan zu ändern, wirken sich diese Medienbrüche äußerst zeitverzögernd aus.

### STAND DER TECHNIK

Bei derzeit durchgeführten Einsätzen sind folgende Nachteile bekannt:
- Der Informationsfluss zwischen den einzelnen Aufgabenbereichen (Erkundung, Einsatzplanung, Einsatzausführung usw.) erfolgt mit wechselnden Kommunikationsmedien (Computer, Papier, analoge Messgeräte). Dadurch treten Medienbrüche auf, wodurch sich Übertragungsfehler einschleichen können, wichtige Informationen verloren gehen können und sich der Ablauf verlangsamen kann.
- Im Kommando-, Melde- und Berichtswesen erfolgt regelmäßig eine manuelle Erstellung und Weitergabe von Einsatzdokumenten in Papierform. Darüber hinaus findet auch die manuelle Methode des Dokumentierens von Erkundungsergebnissen im Kartenmaterial Anwendung.
- In der Kabine von Einsatzfahrzeugen ist häufig nur eine rudimentäre Fahrzeugorientierungsanlage oder eine GPS-gestützte Fahrzeugnavigationsanlage installiert, in die bislang die durch die Einsatzplanung erzeugten Marschstrecken manuell eingegeben werden müssen.
- Die Visualisierung weiterer Planungsergebnisse der Einsatzplanung wie technische Halte, Marsch- und Tankpausen, Betankungsplan, Nachladeplan, Objektschutzplan, Auflockerungsraum, Unterziehraum, Trossbereich, Verfügungsraum, Versorgungsplan erfolgt in realen (Papier-) Karten und nicht gerätegestützt.
- Die Onboard-Diagnosefunktionen der Einsatzfahrzeuge sind für Einsatzzwecke ungenutzt.
- Es kann zwar eine tragbare Wartungshilfe (Portable Maintenance Aid PMA) vorgesehen sein, die den militärischen Nutzer bei Materialerhaltungsaufgaben (zum Beispiel der Waffenanlage) unterstützen soll, das bedeutet aber, dass diese PMA als separates Gerät mitgeführt werden muss.
- Es existiert keine Testmöglichkeit der Munition vor dem Beladen des Startgerätes oder auch für den Fall, dass das Startgerät bereits beladen worden ist.
- Es ist keine Onboard-Trainingsfunktion für einen Stand-Alone-Betrieb oder für den vernetzten Betrieb im Startgerät der Munition implementiert.

### DARSTELLUNG DER ERFINDUNG

Es ist daher die Aufgabe der vorliegenden Erfindung, ein Einsatzcomputersystem anzugeben, mit welchem beginnend mit der Erkundung eines potentiellen Einsatzgebietes bis hin zur endgültigen Ausführung des Einsatzes ein medienbruchfreier Informationsfluss zwischen allen Beteiligten möglich ist, und das flexibel einsetzbar ist.

Diese Aufgabe wird durch das im Patentanspruch 1 beanspruchte Einsatzcomputersystem gelöst.

Dieses erfindungsgemäße Einsatzcomputersystem, das insbesondere aber nicht ausschließlich für militärische Einsätze vorgesehen ist, ist mit zumindest einem Bediencomputer, der eine Rechnereinheit, eine Anzeige- und Bedieneinheit und zumindest eine Datenschnittstelle aufweist, und mit einer Mehrzahl von externen Komponenten versehen, die an die zumindest eine Datenschnittstelle des Bediencomputers - mittelbar oder unmittelbar - anschließbar sind. Die Rechnereinheit ist dabei ausgestaltet, um nach dem Einschalten des Bediencomputers zu überprüfen, ob die zumindest eine Datenschnittstelle mit zumindest einer der externen Komponenten mittelbar oder unmittelbar verbunden ist, und um in Abhängigkeit vom Ergebnis dieser Überprüfung selbsttätig einen Betriebsmodus für den Bediencomputer aus einer Mehrzahl von in einer Speichereinrichtung des Bediencomputers gespeicherten Betriebsmodi auszuwählen und den Bediencomputer und/oder eine auf dem Bediencomputer laufende Software entsprechend zu konfigurieren.

### VORTEILE

Diese erfindungsgemäße Auto-Konfiguration des Bediencomputers beziehungsweise der auf dem Bediencomputer laufenden Software in Abhängigkeit von den an den Bediencomputer angeschlossenen externen Komponenten gestattet es, eine einzige Art von Bediencomputer während des gesamten Einsatzverlaufs zu nutzen, wobei der jeweilige Nutzer des Bediencomputers keine spezielle Ausbildung hinsichtlich der Konfiguration des Bediencomputers oder der darauf ablaufenden Software benötigt. Der Bediencomputer wechselt also in Abhängigkeit von den an ihn angeschlossenen Komponenten automatisch seine Eigenschaften und bietet dementsprechend dem jeweiligen Nutzer nur die für die aktuelle Nutzung erforderlichen Eingabe- und Anzeigemöglichkeiten an. Der Schulungsaufwand der Nutzer kann sich daher auf die einem jeweiligen Nutzer zugewiesenen Aufgaben beschränken, ohne dass es dazu einer Vielzahl unterschiedlicher Computer bedarf. Zudem ermöglicht das erfindungsgemäße Einsatzcomputersystem, dass die gesamte Datenkommunikation eines Einsatzes mittels eines einzigen Typs Bediencomputer abläuft, sodass es zu keinen Medienbrüchen bei der Informationsübertragung kommt.

Weitere bevorzugte und vorteilhafte Ausgestaltungsmerkmale des erfindungsgemäßen Einsatzcomputersystems sind Gegenstand der Unteransprüche 2 bis 15.

Von Vorteil ist es, wenn eine der externen Komponenten von einem Satelliten-Navigationsempfänger gebildet ist. Damit kann der mit dieser Komponente verbundene Bediencomputer auf einfachste Weise mobil zur Erkundung eingesetzt werden.

Besonders von Vorteil ist es, wenn eine der externen Komponenten von einem in einem Einsatzfahrzeug vorgesehenen Einsatzfahrzeugcomputer gebildet ist, der zur Koppelung mit dem Bediencomputer ausgebildet ist und der mit einer Schnittstelleneinheit zur Verbindung mit einer Datenschnittstelle des Bediencomputers versehen ist, wobei der Einsatzfahrzeugcomputer eine Fahrzeugrechnereinheit aufweist, die mit dem Bediencomputer über die Schnittstelleneinheit und die Datenschnittstelle verbindbar ist. Bei dieser Variante lässt sich der Bediencomputer schnell und problemlos in ein Einsatzfahrzeug implementieren und der im Einsatzfahrzeug vorhandenen Fahrzeugcomputer wird integraler Bestandteil des Einsatzcomputersystems.

Vorteilhaft ist dabei, wenn der Einsatzfahrzeugcomputer mit zumindest einer Fahrzeugschnittstelle ausgestattet ist, die zur Datenübertragung zwischen dem an den Einsatzfahrzeugcomputer angeschlossenen Bediencomputer und zumindest einer Fahrzeugkomponente des Einsatzfahrzeugs verbindbar oder verbunden ist. Dadurch können bereits vorhandene Fahrzeugkomponenten, wie zum Beispiel Wegstreckenzähler, in das Einsatzcomputersystem integriert werden.

Auch vorteilhaft ist es, wenn die mit der Fahrzeugschnittstelle verbundene oder verbindbare Fahrzeugkomponente von einem Wartungs- und Diagnosecomputer des Fahrzeugs gebildet ist.

Weiter kann es von Vorteil sein, wenn der Einsatzfahrzeugcomputer mit zumindest einer Waffenanlagenschnittstelle ausgestattet ist, die zur Datenübertragung zwischen einer Waffenanlage und dem an den Einsatzfahrzeugcomputer angeschlossenen Bediencomputer mit zumindest einer Waffenanlagenkomponente der Waffenanlage verbindbar ist. Diese Ausführungsform ist insbesondere dann von Vorteil, wenn das Einsatzfahrzeug bewaffnet ist oder Teil einer Waffenanlage ist.

Bevorzugt ist dabei die mit der Waffenanlagenschnittstelle verbindbare Waffenanlagenkomponente von einer Bedieneinrichtung der Waffenanlage gebildet. Dies ermöglicht es der Fahrzeugbesatzung, im geschützten und häufig gepanzerten Fahrzeuginnenraum zu verbleiben und die Waffenanlage mittels des Bediencomputers zu betätigen.

Ist die mit der Waffenanlagenschnittstelle verbindbare Waffenanlagenkomponente von einem Wartungs- und Diagnosecomputer der Waffenanlage und/oder der in der Waffenanlage enthaltenen Munition, beispielsweise einem Flugkörper, gebildet, so kann die Waffenanlage beziehungsweise die Munition von der im geschützten Fahrzeug befindlichen Mannschaft einer Wartung und einem Funktionstest unterzogen werden, ohne dass es des Anschließens eines gesonderten Wartungs-und Testcomputers bedarf.

Auch von Vorteil ist es, wenn die mit der Waffenanlagenschnittstelle verbindbare Waffenanlagenkomponente von einer Test- und/oder Trainingseinrichtung der Waffenanlage und/oder der in der Waffenanlage enthaltenen Munition gebildet. Dadurch ist es nicht erforderlich, einen zusätzlichen Test- und Trainingscomputer mitzuführen.

Ist der Einsatzfahrzeugcomputer mit zumindest einer Navigationsschnittstelle ausgestattet, die zur Datenübertragung zwischen zumindest einer internen oder externen Navigationseinrichtung des Einsatzfahrzeugs und dem an den Einsatzfahrzeugcomputer angeschlossenen Bediencomputer mit zumindest einer Navigationseinrichtungskomponente der zumindest einen Navigationseinrichtung verbindbar, so kann die im Fahrzeug vorgesehene Navigationseinrichtung genutzt werden und beispielsweise von der Einsatzplanung ausgearbeitete Marschrouten können mittels des Bediencomputers direkt in das fahrzeugeigene Navigationssystem eingespielt werden.

Vorteilhaft ist es auch, wenn der Einsatzfahrzeugcomputer mit zumindest einer Kommunikationseinrichtung ausgestattet oder verbindbar ist, die zur Datenübertragung zwischen zumindest einer externen Einsatzleitstelle und dem an den Einsatzfahrzeugcomputer angeschlossenen Bediencomputer mit zumindest einer Kommunikationskomponente der zumindest einen externen Einsatzleitstelle verbindbar ist. Dadurch kann eine direkte und gegebenenfalls auch permanente Datenübertragungsverbindung zwischen dem Bediencomputer und der Einsatzleitstelle aufgebaut werden. Eine solche Kommunikationsschnittstelle mit Fähigkeiten zum Senden und zum Empfangen von Daten kann alternativ auch direkt an eine der Datenschnittstellen des Bediencomputers anschließbar sein. Diese Fähigkeiten der Kommunikationseinrichtung zum Senden und Empfangen von Daten umfassen beispielsweise die Fähigkeiten zur Kommunikation im Stehen und Fahren via Truppenfunk (VHF/UHF), via Kurzwellenfunk (HF) oder mittels militärischer oder ziviler Satellitenkommunikationssysteme.

Vorteilhaft ist es auch, wenn der Einsatzfahrzeugcomputer zumindest eine Überwachungssystemschnittstelle aufweist, die zur Datenübertragung zwischen zumindest einem Überwachungssystem und dem an den Einsatzfahrzeugcomputer angeschlossenen Bediencomputer mit zumindest einer Überwachungskomponente des Überwachungssystems verbindbar ist. Ein solches Überwachungssystem kann beispielsweise ein optisches Überwachungssystem (mit zumindest einer Bilderfassungseinrichtung), ein akustisches Überwachungssystem (zum Beispiel ein Sonar) oder ein LIDAR- oder RADAR-Überwachungssystem (zum Beispiel ein Radar Range Measurement Aid) sein. Ein solches Überwachungssystem kann alternativ auch direkt an eine der Datenschnittstellen des Bediencomputers anschließbar sein.

Vorzugsweise ist die mit der Überwachungssystemschnittstelle verbindbare Überwachungskomponente von einem mit Aufklärungsmitteln ausgestatteten Flugkörper, zum Beispiel einer Drohne, des Überwachungssystems gebildet. Dieser Flugkörper ist dabei vom Bediencomputer aus steuerbar und die von den Aufklärungsmitteln erfasste Information wird als Datenstrom an den Bediencomputer übertragen. Der Bediencomputer kann so zum Beispiel ein von einer Bilderfassungseinrichtung an Bord des Flugkörpers aufgenommenes Bild oder Video auf seiner Anzeigeeinrichtung wiedergeben.

Die direkte und die indirekte Übertragung der Daten zwischen dem Bediencomputer und den diversen externen Komponenten und von diesen zum Bediencomputer kann nicht nur über kabelgebundene Verbindungen, sondern bevorzugt auch drahtlos erfolgen.

Darum ist es von besonderem Vorteil, wenn Ver- und Entschlüsselungseinheiten vorgesehen sind, die ausgestaltet sind, um einen über die jeweilige Verbindung zwischen dem Bediencomputer und der externen Komponente, zwischen dem Bediencomputer und dem Einsatzfahrzeugcomputer und/oder zwischen dem Einsatzfahrzeugcomputer und der externen Komponente ausgesandten Datenstrom zu verschlüsseln und einen über die jeweilige Verbindung empfangenen Datenstrom zu entschlüsseln. Hierdurch wird nicht nur die Abhörsicherheit erhöht, sondern auch das Risiko des Einschleusens von manipulierten Daten von außen reduziert.

Von Vorteil ist es auch, wenn Daten erfassende Aufklärungsmittel vorgesehen sind, die jeweils eine Datenerfassungskomponente aufweisen, die mit dem Bediencomputer und/oder mit dem Einsatzfahrzeugcomputer zur Datenübertragung verbindbar ist. Dies ermöglicht es beispielsweise, Daten erfassende Peilferngläser einzusetzen, deren erfasste Daten dann an den Bediencomputer übertragen werden.

Der Kern der Erfindung liegt also darin, aus zum Teil vorhandenen und bereits jetzt für die Einsatzplanung isoliert genutzten Komponenten oder auch aus derzeit für andere Zwecke genutzten Komponenten (zum Beispiel Fahrzeug-Wartungscomputer) ein integriertes Einsatzcomputersystem zu bilden, dessen Kern der Bediencomputer bildet, der sich in Abhängigkeit von den (kabelgebunden oder drahtlos) mittelbar oder unmittelbar angeschlossenen Komponenten automatisch konfiguriert.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Darstellung eines Bediencomputers eines erfindungsgemäßen Einsatzcomputersystems;
- Fig. 2: den Bediencomputer aus Fig. 1 mit einer unmittelbar angeschlossenen externen Komponente;
- Fig. 3: den Bediencomputer aus Fig. 1 verbunden mit einem Einsatzfahrzeugcomputer;
- Fig. 4: die in Fig. 3 dargestellte Kombination aus Bediencomputer und Einsatzfahrzeugcomputer mit über den Einsatzfahrzeugcomputer mittelbar an den Bediencomputer angeschlossenen externen Komponenten.

### DARSTELLUNG VON BEVORZUGTEN AUSFÜHRUNGSBEISPIELEN

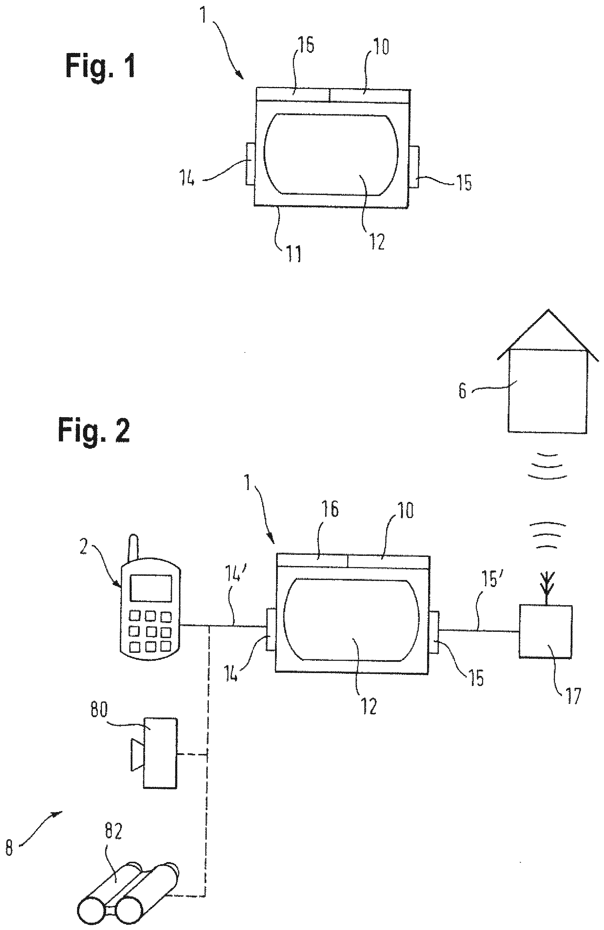

In Fig. 1 ist schematisch ein Bediencomputer 1 eines erfindungsgemäßen Einsatzcomputersystems gezeigt. Der Bediencomputer 1 ist ein tragbarer Computer, der ähnlich einem "Toughbook" ausgestaltet ist, und ist somit mobil und portabel. Der Bediencomputer 1 ist somit versehen mit einem für den rauen militärischen Einsatz geeigneten Gehäuse 11, in welchem eine Rechnereinheit 10, eine Speichereinrichtung 16 und eine Anzeige- und Bedieneinheit 12, beispielsweise ein berührungsempfindlicher Bildschirm, vorgesehen sind. Zudem ist der Bediencomputer 1 im gezeigten Beispiel mit zwei Datenschnittstellen 14, 15 versehen, wobei auch nur eine Datenschnittstelle oder mehr als zwei Datenschnittstellen vorgesehen sein können.

Die Datenschnittstellen 14, 15 (und gegebenenfalls weitere Datenschnittstellen) sind vorzugsweise standardisiert ausgebildet, so dass eine Vielzahl von unterschiedlichen externen Komponenten an den Bediencomputer 1 mittels der Datenschnittstellen 14, 15 anschließbar ist.

In Fig. 2 ist beispielhaft gezeigt, wie ein mobiler Satelliten-Navigationsempfänger 2, der beispielsweise von einem "Handheld"-Gerät gebildet ist, mit der Datenschnittstelle 14 verbunden ist. Über diese Datenkommunikationsverbindung 14' werden beispielsweise die vom Satelliten-Navigationsempfänger ermittelten Positionsdaten eines aktuellen Standorts an den Bediencomputer 1 übertragen. Außerdem kann es vorgesehen sein, dass die Bedienung des tragbaren Satelliten-Navigationsempfängers 2 über die Bedieneinheit 12 des Bediencomputers 1 ermöglicht ist.

Die in Fig. 2 dargestellte Kombination aus Bediencomputer 1 und dem unmittelbar an diesen angeschlossenen Satelliten-Navigationsempfänger 2 bildet bereits eine für sich mobil einsetzbare Einheit innerhalb des erfindungsgemäßen portablen Einsatzcomputersystems.

Mit dieser Einheit aus tragbarem Bediencomputer 1 und tragbarem Satelliten-Navigationsempfänger 2 kann beispielsweise die Erkundung eines potentiellen Einsatzgebiets durchgeführt werden, ohne dass es dazu eines speziell ausgerüsteten Fahrzeugs bedarf, so dass die in Fig. 2 dargestellte Einheit auch in einem zivilen Fahrzeug, beispielsweise einem Mietwagen, einsetzbar ist. Ebenso gut kann die in Fig. 2 dargestellte Einheit von einem nicht motorisierten Erkundungstrupp mitgeführt werden, da sie tragbar und mobil einsetzbar ist.

Das Anschließen des Satelliten-Navigationsempfängers 2 an eine der Datenschnittstellen 14, 15 bewirkt, dass sich der Bediencomputer 1 automatisch in einen Betriebsmodus konfiguriert, der die Durchführung jener Aufgaben zulässt, die mit dem unmittelbar angeschlossenen Satelliten-Navigationsempfänger 2 durchführbar sein sollen. Dazu ist der Bediencomputer 1 oder die auf ihm ablaufende Software so ausgestaltet, dass nach dem Einschalten des Bediencomputers überprüft wird, ob die zumindest eine Datenschnittstelle 14, 15 mit zumindest einer externen Komponente verbunden ist. Falls diese Prüfung positiv ausfällt, so wird in der Folge geprüft, mit welcher externen Komponente die jeweilige Datenschnittstelle 14, 15 mittelbar oder unmittelbar verbunden ist. Im vorliegenden Fall der Fig. 2 erkennt also der Bediencomputer 1 beziehungsweise die auf ihm ablaufende Software, dass an der Datenschnittstelle 14 eine externe Komponente angeschlossen ist und dass es sich bei dieser externen Komponente um einen tragbaren Satelliten-Navigationsempfänger 2 handelt.

Mit dieser Information kann die auf dem Bediencomputer 1 ablaufende Software aus einer Mehrzahl von beispielsweise in der Speichereinrichtung 16, zum Beispiel als Datenbank, gespeicherten Betriebsmodi jenen Betriebsmodus auswählen, der für die in Fig. 2 gezeigte Kombination aus Bediencomputer 1 und tragbarem Satelliten-Navigationsempfänger 2 vorbestimmt ist.

Die Überprüfung der Datenschnittstellen 14, 15 und der gegebenenfalls darin angeschlossenen externen Komponenten kann nicht nur automatisch nach dem Einschalten des Bediencomputers durchgeführt werden, sondern beispielsweise auch dann, wenn eine externe Komponente neu an eine der Datenschnittstellen 14, 15 angeschlossen wird. Zudem kann es auch vorgesehen sein, dass ein Bediener einen Befehl zur Autokonfiguration in die Bedieneinheit 12 eingeben kann, beispielsweise durch Betätigen eines virtuell auf der Bedieneinheit 12 angezeigten Schalters oder Tasters.

Anstelle des in Fig. 1 gezeigten Satelliten-Navigationsempfängers 2 oder zusätzlich dazu können weitere Aufklärungsmittel 8 bildende Erkundungsgeräte an den Bediencomputer 1 angeschlossen werden, beispielsweise Kameras 80 oder mit Datenerfassungsmitteln versehene Peilferngläser 82, die externe Komponenten bilden und deren erfasste Daten über die Schnittstelle 14 an den Bediencomputer 1 übertragen werden.

In Fig. 2 ist die Datenschnittstelle 15 des Bediencomputers 1 über eine Datenkommunikationsverbindung 15' mit einer Datensende- und Datenempfangseinrichtung 17 verbunden, mit der es beispielsweise möglich ist, bei der Erkundung gesammelte Daten an eine zentrale Einsatzleitstelle 6 zu übertragen beziehungsweise Daten von dieser zu empfangen.

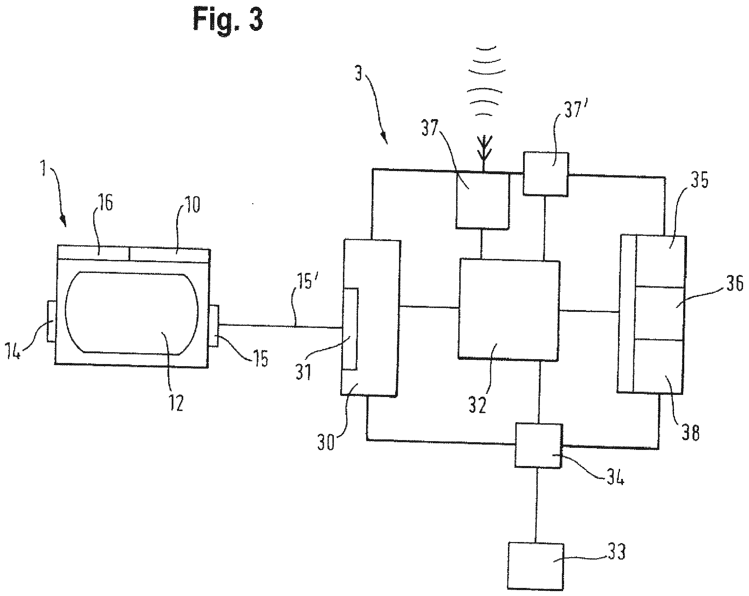

In Fig. 3 ist schematisch ein Szenario dargestellt, bei welchem der Bediencomputer 1 mittels seiner Datenschnittstelle 15 mit einem Einsatzfahrzeugcomputer 3 über eine Datenkommunikationsverbindung 15' gekoppelt ist.

Auch wenn in den gezeigten Beispielen die Datenkommunikationsverbindungen 14' und 15' als physische Verbindung dargestellt sind, sind diese Datenkommunikationsverbindungen nicht auf Kabelverbindungen beschränkt, sondern können ebenso gut drahtlose Datenkommunikationsverbindungen sein.

Der Einsatzfahrzeugcomputer 3 ist in einem beispielsweise militärischen, geschützten Einsatzfahrzeug eingebaut und besitzt für dieses Fahrzeug spezifische Eigenschaften. Dazu ist der Einsatzfahrzeugcomputer 3 mit einer Fahrzeugrechnereinheit 32 versehen, die mit einer Schnittstelleneinheit 30 zur bidirektionalen Datenübertragung verbunden ist. Die Schnittstelleneinheit 30 weist eine standardisierte Bediencomputer-Schnittstelle 31 auf, die zur Verbindung mit einer der Datenschnittstellen 14, 15 des Bediencomputers 1 ausgestaltet ist.

Der Einsatzfahrzeugcomputer 3 ist mit einer Fahrzeugschnittstelle 34 ausgestattet, die mit der Fahrzeugrechnereinheit 32 zum bidirektionalen Datenaustausch verbunden ist. An die Fahrzeugschnittstelle 34 ist zumindest eine Fahrzeugkomponente 33 des Einsatzfahrzeugs anschließbar. Eine solche Fahrzeugkomponente 33 kann beispielsweise ein fahrzeuginternes Wartungs- und Diagnosesystem sein, das so in das portable Einsatzcomputersystem integriert wird.

Des Weiteren ist die Fahrzeugrechnereinheit 32 mit einer Mehrzahl von Sekundärschnittstellen ausgestattet. Diese Sekundärschnittstellen umfassen beispielsweise eine Waffenanlagenschnittstelle 35, eine Navigationsschnittstelle 36 und/oder eine Überwachungssystemschnittstelle 38. Die vorgenannten Sekundärschnittstellen sind nicht notwendigerweise in allen für den Einsatz des portablen Einsatzcomputersystems geeigneten Fahrzeugen vorgesehen, sondern der entsprechende Einsatzfahrzeugcomputer 3 kann an das entsprechende Einsatzfahrzeug angepasst ausgebildet sein. So ist es beispielsweise nicht erforderlich, ein Fahrzeug, das nicht als Waffenträger ausgebildet ist oder kein Kommandofahrzeug für eine Waffenbedienung ist, mit einer Waffenanlagenschnittstelle 35 auszustatten. Andererseits erkennt der mit dem Einsatzfahrzeugcomputer 3 verbundene Bediencomputer 1 selbsttätig, ob an die Waffenanlagenschnittstelle 35 eine externe Komponente einer Waffenanlage angeschlossen ist.

Schließlich kann der Einsatzfahrzeugcomputer 3 auch mit einer Kommunikationseinrichtung 37 ausgestattet sein oder er kann über eine Kommunikationseinrichtungsschnittstelle 37' mit einer externen Kommunikationseinrichtung verbindbar sein. Sowohl die Kommunikationseinrichtungsschnittstelle 37' als auch die gegebenenfalls vorgesehene integrierte Kommunikationseinrichtung 37 sind mit der Fahrzeugrechnereinheit 32 zur bidirektionalen Datenübertragung verbunden.

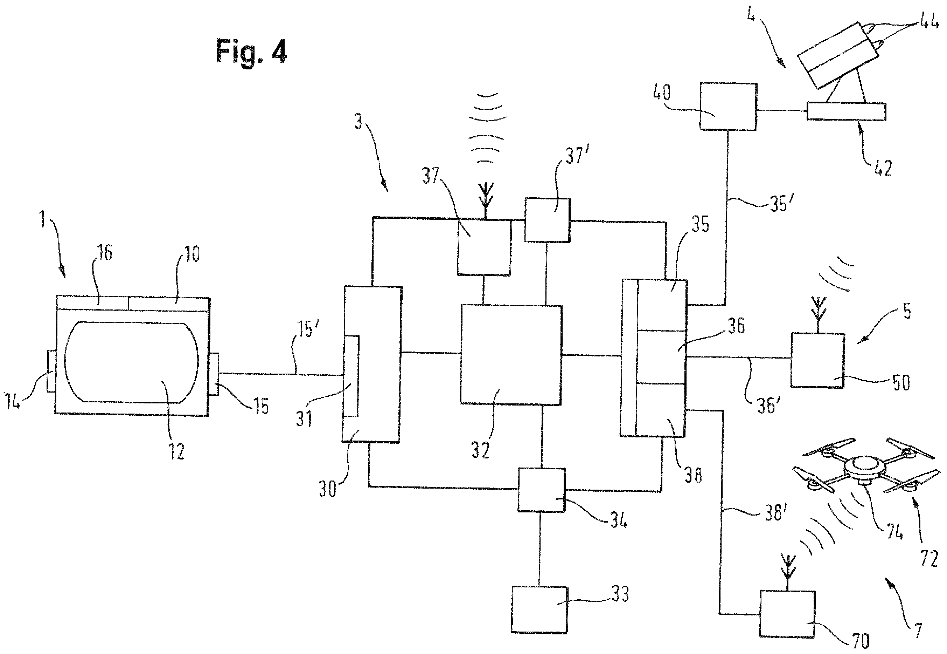

Fig. 4 zeigt die Einheit aus Bediencomputer 1 und Einsatzfahrzeugcomputer 3, wobei an die Sekundärschnittstellen entsprechende externe Komponenten angeschlossen sind. So ist die Waffenanlagenschnittstelle 35 über eine kabelgebundene oder drahtlose Datenübertragungsverbindung 35' mit einer Waffenanlagenkomponente 40 einer Waffenanlage 4 verbunden. Die Waffenanlagenkomponente 40 ist beispielsweise von einem Waffenrechner gebildet, der mit einer Abschusseinrichtung 42 für Munition 44, zum Beispiel Flugkörper, zur Datenübertragung verbunden ist. Die mit der Waffenanlagenschnittstelle 35 verbundene Waffenanlagenkomponente 40 kann aber ebenso von einer Bedieneinrichtung der Waffenanlage 4 oder von einem Wartungs- und Diagnosecomputer der Waffenanlage 4 oder der in der Waffenanlage 4 enthaltenen Munition 44 oder von einer Test- und/oder Trainingseinrichtung der Waffenanlage oder der in der Waffenanlage 4 enthaltenen Munition 44 gebildet sein.

Die Navigationsschnittstelle 36 des Einsatzfahrzeugcomputers 3 ist über eine Datenübertragungsverbindung 36', die ebenfalls kabelgebunden oder drahtlos sein kann, mit einer beispielsweise von einem Navigationscomputer gebildeten Navigationseinrichtungskomponente 50 einer internen oder externen Navigationseinrichtung 5 verbunden. Bei Fahrzeugen, die bereits mit einem werkseitig integrierten Fahrzeugnavigationssystem versehen sind, kann dieses die Navigationseinrichtungskomponente 50 bilden.

Die Überwachungssystemschnittstelle 38 ist mit einer Überwachungskomponente 70 eines Überwachungssystems 7 mittels einer Datenkommunikationsverbindung 38', die ebenfalls kabelgebunden oder drahtlos sein kann, zur bidirektionalen Datenübertragung verbunden. Die Überwachungskomponente 70 ist im gezeigten Beispiel eine Steuerungseinrichtung für eine Drohne 72, die mit einer Überwachungskamera 74 ausgestattet ist. Sowohl die Steuerungssignale für die Drohne 72 und für deren Kamera 74 als auch die von der Kamera 74 erfassten Bilddaten werden über eine bidirektionale Funkstrecke 76 zwischen der Drohne 72 und der von der Steuereinrichtung gebildeten Überwachungskomponente 70 übertragen. Auf diese Weise können sowohl die Drohne 72 als auch die Kamera 74 vom Bediencomputer 1 aus gesteuert werden und auch die von der Kamera 74 aufgenommenen Bilder können auf der Anzeige- und Bedieneinheit 12 des Bediencomputers 1 angezeigt werden.

Zumindest alle drahtlosen Datenübertragungsverbindungen weisen (nicht gezeigte) Ver- und Entschlüsselungseinheiten auf, die ausgestaltet sind, um einen über die jeweilige Verbindung zwischen dem Bediencomputer 1 und der externen Komponente, zwischen dem Bediencomputer 1 und dem Einsatzfahrzeugcomputer 3 und/oder zwischen dem Einsatzfahrzeugcomputer 3 und der externen Komponente ausgesandten Datenstrom zu verschlüsseln und einen über die jeweilige Verbindung empfangenen Datenstrom wieder zu entschlüsseln.

Der mit dem Einsatzfahrzeugcomputer 3 verbundene Bediencomputer 1 bildet in einem besonders bevorzugten Anwendungsfall einen "Digital Vehicle Assistant" (DVA) als audiovisuelle Kommando-, Führungs- und Informationszentrale, die in der vorzugsweise gepanzerten und klimatisierten Fahrerkabine von mobilen Großgeräten eines taktischen Luftverteidigungssystems vorgesehen ist. Die Fahrerkabine ist für das Bedienpersonal zudem Wetterschutz und ABC-Schutz. Der Bediencomputer 1 kann in der Fahrerkabine mit dem fest in das jeweilige Fahrzeug eingebauten und fahrzeugspezifisch beziehungsweise großgerätespezifisch ausgestalteten Einsatzfahrzeugcomputer 3 verbunden werden.

Dieser Digital Vehicle Assistant (DVA) kann in der Fahrerkabine folgender mobiler Großgeräte eines taktischen Luftverteidigungssystems installiert sein:
- Nutzfahrzeug mit taktischer Befehlszentrale (TOC)
- Nutzfahrzeug mit Suchradar (SR)
- Nutzfahrzeug mit Lenk- und Folgeradar (FR)
- Erkundungs-Nutzfahrzeug
- Startgerät-Nutzfahrzeug
- Tross-Nutzfahrzeug
- Nachlade-Nutzfahrzeug
- Tank-Nutzfahrzeug
- Energieversorgungs-Nutzfahrzeug (Begleit-Nutzfahrzeug für TOC, SR, FR)
- Truppentransporter-Nutzfahrzeug
- Wartungs-Nutzfahrzeug
- Bergungs-Nutzfahrzeug

Diese DVAs, also die Einheiten aus dem jeweiligen Bediencomputer 1 und dem jeweiligen Einsatzfahrzeugcomputer 3, mit den entsprechenden, daran angeschlossenen externen Komponenten des jeweiligen mobilen Großgerätes bilden gemeinsam ein Beispiel eines komplexen erfindungsgemäßen, baukastenartig zusammenstellbaren Einsatzcomputersystems. Dabei ist die Ausprägung der dem Bediener zugänglichen Funktionen und somit die auf der Anzeige- und Bedieneinheit 12 des Bediencomputers 1 angezeigte und von der auf dem Bediencomputer 1 ablaufenden Software zur Verfügung gestellte Menü-Hierarchie abhängig vom Typ des Großgerätes, mit dem der jeweilige Bediencomputer 1 über den zugehörigen spezifischen Einsatzfahrzeugcomputer 3 verbunden ist. Die Bediencomputer und die auf ihnen jeweils ablaufende Software sind identisch und somit beliebig gegeneinander austauschbar. Die Konfiguration der auf dem Bediencomputer 1 ablaufenden Software erfolgt dabei automatisch in Abhängigkeit vom mit dem Bediencomputer verbundenen spezifischen Einsatzfahrzeugcomputer 3 und der an diesen angeschlossenen externen Komponenten. Damit ist bereits bei der Einsatzvorbereitung und während des gesamten Einsatzes eine medienbruchfreie Datenkommunikation innerhalb aller an einem Einsatz Beteiligten gewährleistet.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Bediencomputer
- 2: Satelliten-Navigationsempfänger
- 3: Einsatzfahrzeugcomputer
- 4: Waffenanlage
- 5: Navigationseinrichtung
- 6: Einsatzleitstelle
- 7: Überwachungssystem
- 8: Aufklärungsmittel
- 10: Rechnereinheit
- 11: Gehäuse
- 12: Anzeige- und Bedieneinheit
- 14: Datenschnittstelle
- 14': Datenkommunikationsverbindung
- 15: Datenschnittstelle
- 15': Datenkommunikationsverbindung
- 16: Speichereinrichtung
- 30: Schnittstelleneinheit
- 31: Bediencomputer-Schnittstelle
- 32: Fahrzeugrechnereinheit
- 33: Fahrzeugkomponente
- 34: Fahrzeugschnittstelle
- 35: Waffenanlagenschnittstelle
- 35': Datenübertragungsverbindung
- 36: Navigationsschnittstelle
- 36': Datenübertragungsverbindung
- 37: Kommunikationseinrichtung
- 37': Kommunikationseinrichtungsschnittstelle
- 38: Überwachungssystemschnittstelle
- 40: Waffenanlagenkomponente
- 42: Abschusseinrichtung
- 44: Munition
- 50: Navigationseinrichtungskomponente
- 60: Kommunikationskomponente
- 70: Überwachungskomponente
- 72: Drohne
- 74: Überwachungskamera
- 76: bidirektionale Funkstrecke
- 80: Kamera
- 82: Peilfernglas

## Patentansprüche

1. Einsatzcomputersystem, insbesondere für militärische Einsätze, mit zumindest einem Bediencomputer (1), der eine Rechnereinheit (10), einer Anzeige- und Bedieneinheit (12) und zumindest eine Datenschnittstelle (14, 15) aufweist, und mit einer Mehrzahl von externen Komponenten (2, 3, 40, 50, 60, 70, 80, 82), die an die zumindest eine Datenschnittstelle (14, 15) des Bediencomputers (1) anschließbar sind, wobei die Rechnereinheit (10) ausgestaltet ist,
• um nach dem Einschalten des Bediencomputers (1) oder nach dem Anschließen einer externen Komponente (2, 3, 40, 50, 60, 70, 80, 82) zu überprüfen, ob die zumindest eine Datenschnittstelle (14, 15) mit zumindest einer der externen Komponenten (2, 3, 40, 50, 60, 70, 80, 82) verbunden ist und, falls zutreffend, mit welcher externen Komponente (2, 3, 40, 50, 60, 70, 80, 82) die jeweilige Datenschnittstelle (14, 15) mittelbar oder unmittelbar verbunden ist, und
• um in Abhängigkeit vom Ergebnis dieser Überprüfung selbsttätig einen Betriebsmodus für den Bediencomputer (1) aus einer Mehrzahl von in einer Speichereinrichtung (16) gespeicherten Betriebsmodi auszuwählen und den Bediencomputer (1) und/oder eine auf dem Bediencomputer (1) laufende Software entsprechend zu konfigurieren.

2. Einsatzcomputersystem nach Patentanspruch 1,
**dadurch gekennzeichnet,**
**dass** eine der externen Komponenten von einem Satelliten-Navigationsempfänger (2) gebildet ist.

3. Einsatzcomputersystem nach Patentanspruch 1 oder 2,
**dadurch gekennzeichnet,**
**dass** eine der externen Komponenten von einem in einem Einsatzfahrzeug vorgesehenen Einsatzfahrzeugcomputer (3) gebildet ist, der zur Koppelung mit dem Bediencomputer (1) ausgebildet ist und der mit einer Schnittstelleneinheit (30) zur Verbindung mit einer Datenschnittstelle (14, 15) des Bediencomputers (1) versehen ist, wobei der Einsatzfahrzeugcomputer (3) eine Fahrzeugrechnereinheit (32) aufweist, die mit dem Bediencomputer (1) über die Schnittstelleneinheit (30) und die Datenschnittstelle (14, 15) verbindbar ist.

4. Einsatzcomputersystem nach Patentanspruch 3,
**dadurch gekennzeichnet,**
**dass** der Einsatzfahrzeugcomputer (3) mit zumindest einer Fahrzeugschnittstelle (34) ausgestattet ist, die zur Datenübertragung zwischen dem an den Einsatzfahrzeugcomputer (3) angeschlossenen Bediencomputer (1) und zumindest einer Fahrzeugkomponente (33) des Einsatzfahrzeugs verbindbar oder verbunden ist.

5. Einsatzcomputersystem nach Anspruch 4,
**dadurch gekennzeichnet,**
**dass** die mit der Fahrzeugschnittstelle (34) verbundene oder verbindbare Fahrzeugkomponente (33) von einem Wartungs- und Diagnosecomputer des Fahrzeugs gebildet ist.

6. Einsatzcomputersystem nach Patentanspruch 3, 4 oder 5,
**dadurch gekennzeichnet,**
**dass** der Einsatzfahrzeugcomputer (3) mit zumindest einer Waffenanlagenschnittstelle (35) ausgestattet ist, die zur Datenübertragung zwischen einer Waffenanlage (4) und dem an den Einsatzfahrzeugcomputer (3) angeschlossenen Bediencomputer (1) mit zumindest einer Waffenanlagenkomponente (40) der Waffenanlage (4) verbindbar ist.

7. Einsatzcomputersystem nach Anspruch 6,
**dadurch gekennzeichnet,**
**dass** die mit der Waffenanlagenschnittstelle (35) verbindbare Waffenanlagenkomponente (40) von einer Bedieneinrichtung der Waffenanlage (4) gebildet ist.

8. Einsatzcomputersystem nach Anspruch 6,
**dadurch gekennzeichnet,**
**dass** die mit der Waffenanlagenschnittstelle (35) verbindbare Waffenanlagenkomponente (40) von einem Wartungs- und Diagnosecomputer der Waffenanlage (4) und/oder der in der Waffenanlage (4) enthaltenen Munition (44) gebildet ist.

9. Einsatzcomputersystem nach Anspruch 6,
**dadurch gekennzeichnet,**
**dass** die mit der Waffenanlagenschnittstelle (35) verbindbare Waffenanlagenkomponente (40) von einer Test- und/oder Trainingseinrichtung der Waffenanlage (4) und/oder der in der Waffenanlage (4) enthaltenen Munition (44) gebildet ist.

10. Einsatzcomputersystem nach einem der Patentanspruch 3 bis 9,
**dadurch gekennzeichnet,**
**dass** der Einsatzfahrzeugcomputer (3) mit zumindest einer Navigationsschnittstelle (36) ausgestattet ist, die zur Datenübertragung zwischen zumindest einer internen oder externen Navigationseinrichtung (5) des Einsatzfahrzeugs und dem an den Einsatzfahrzeugcomputer (3) angeschlossenen Bediencomputer (1) mit zumindest einer Navigationseinrichtungskomponente (50) der zumindest einen Navigationseinrichtung (5) verbindbar ist.

11. Einsatzcomputersystem nach einem der Patentansprüche 3 bis 10,
**dadurch gekennzeichnet,**
**dass** der Einsatzfahrzeugcomputer (3) mit zumindest einer Kommunikationseinrichtung (37) ausgestattet oder verbindbar ist, die zur Datenübertragung zwischen zumindest einer externen Einsatzleitstelle (6) und dem an den Einsatzfahrzeugcomputer (3) angeschlossenen Bediencomputer (1) mit zumindest einer Kommunikationskomponente (60) der zumindest einen externen Einsatzleitstelle (6) verbindbar ist.

12. Einsatzcomputersystem nach einem der Ansprüche 3 bis 11,
**dadurch gekennzeichnet,**
**dass** der Einsatzfahrzeugcomputer (3) weiterhin zumindest eine Überwachungssystemschnittstelle (38) aufweist, die zur Datenübertragung zwischen zumindest einem Überwachungssystem (7) und dem an den Einsatzfahrzeugcomputer (3) angeschlossenen Bediencomputer (1) mit zumindest einer Überwachungskomponente (70) des Überwachungssystems (7) verbindbar ist.

13. Einsatzcomputersystem nach Anspruch 12,
**dadurch gekennzeichnet,**
**dass** die mit der Überwachungssystemschnittstelle (38) verbindbare Überwachungskomponente (70) von einem mit Aufklärungsmitteln ausgestatteten Flugkörper, zum Beispiel einer Drohne, des Überwachungssystems (7) gebildet ist.

14. Einsatzcomputersystem nach einem der vorhergehenden Ansprüche,
**dadurch gekennzeichnet,**
**dass** weiterhin Ver- und Entschlüsselungseinheiten vorgesehen sind, die ausgestaltet sind, um einen über die jeweilige Verbindung zwischen dem Bediencomputer (1) und der externen Komponente, zwischen dem Bediencomputer (1) und dem Einsatzfahrzeugcomputer (3) und/oder zwischen dem Einsatzfahrzeugcomputer (3) und der externen Komponente ausgesandten Datenstrom zu verschlüsseln und einen über die jeweilige Verbindung empfangenen Datenstrom zu entschlüsseln.

15. Einsatzcomputersystem nach einem der vorhergehenden Ansprüche,
**dadurch gekennzeichnet,**
**dass** Daten erfassende Aufklärungsmittel (8) vorgesehen sind, die jeweils eine Datenerfassungskomponente (80, 82) aufweisen, die mit dem Bediencomputer (1) und/oder mit dem Einsatzfahrzeugcomputer (3) zur Datenübertragung verbindbar ist.
